# EUROPÄISCHE PATENTSCHRIFT

(11) **EP 0 627 575 B1**
(45) Veröffentlichungstag und Bekanntmachung des Hinweises auf die Patenterteilung: **23.10.1996**
(21) Anmeldenummer: 94107514.5
(22) Anmeldetag: 14.05.1994
(51) Int. Cl.: F16H 1/28

(54) **Wolfrom-Planetenzahnradgetriebe mit axial in zwei unterschiedlich verzahnte Bereiche aufgeteilten Planetenrädern**
Wolfrom-Planetary gearing with two axially split toothing areas of different profile
Wolfrom-engrenage planétaire avec denture divisée en deux régions à profil différent

(30) Priorität: 02.06.1993 DE 4318338
(43) Veröffentlichungstag der Anmeldung: 07.12.1994
(73) Patentinhaber: DEWITTA-SPEZIALMASCHINENFABRIK WITTENSTEIN GmbH & CO. KG, D-97999 Igersheim (DE)
(72) Erfinder: Orlowski, Bernhard, D-70176 Stuttgart (DE)
(74) Vertreter: Pfusch, Volker, Dipl.-Ing.

(56) Entgegenhaltungen:
- DE-A- 4 216 402
- DE-B- 1 021 674
- DE-C- 1 157 049
- US-A- 2 401 875
- US-A- 3 307 433

## Beschreibung

Die Erfindung betrifft ein Wolfrom-Planetenzahnradgetriebe mit axial in zwei unterschiedlich verzahnte Bereiche aufgeteilten Planetenrädern nach dem Oberbegriff des Patentanspruchs 1.

Die Erfindung beschäftigt sich in erster Linie mit dem Problem, ein solches Getriebe laufgeräuscharm, spielarm und kleinbauend auszugestalten und zwar bei solchen Getrieben, die mit mehreren über den Umfang verteilten Planetenrädern arbeiten.

Einen grundsätzlichen Lösungsansatz für dieses Problem zeigt das kennzeichnende Merkmal des Anspruchs 1 auf.

Die erfindungsgemäße gegensinnige Schrägverzahnung kann auch als Pfeilverzahnung bezeichnet werden.

Die Teilkreisdurchmesser der beiden Bereiche der Planetenräder können gleich oder ungleich sein. Bei einem gleichen Teilkreisdurchmesser beider Bereiche kann der Schrägungswinkel der gegensinnigen Schrägverzahnung auf den beiden Planetenradbereichen etwa gleich sein. Die in den beiden Bereichen der Planetenräder auftretenden Axialkräfte werden bei einer derartigen Wahl der Zahnschrägung in etwa gegeneinander aufgehoben.

In besonders vorteilhafter Weise läßt sich die Erfindung durch eine unterschiedliche Festlegung der Teilkreisdurchmesser der beiden Planetenradbereiche verwirklichen. Während nämlich bei gleichem Teilkreisdurchmesser beider Planetenradbereiche die Zähnezahlen zwischen dem rotierenden und feststehenden Hohlrad, in die die Planetenräder jeweils gemeinsam eingreifen, nur sehr gering, d. h. maximal drei bis vier Zähne differieren dürfen, da anderenfalls keine ausreichenden Verzahnungskorrekturen mehr möglich sind, lassen sich bei unterschiedlichem Teilkreisdurchmesser der beiden Planetenradbereiche praktisch beliebige Zähnezahlunterschiede zwischen den beiden Hohlrädern realisieren. Dadurch führen unterschiedliche Teilkreisdurchmesser in den beiden Bereichen der Planetenräder zu einer hohen Variationsmöglichkeit in der Einstellung der Übersetzungsverhältnisse. So lassen sich mit einem erfindungsgemäß gestalteten Getriebe mit unterschiedlichen Teilkreisdurchmessern der beiden Planetenradbereiche bei gleichen Getriebehauptabmessungen ohne weiteres Übersetzungsverhältnisse zwischen etwa i=10 und i=4000 mit jeweils beliebig unterschiedlichen Zähnezahlen der beiden Planetenradbereiche erzielen. Die Zähnezahlen in den beiden Bereichen der Planetenräder können vollkommen unabhängig voneinander mit beliebigen Differenzen gewählt werden.

Um bei Planetenrädern mit Bereichen eines unterschiedlichen Teilkreisdurchmessers bei einer gegensinnigen Verzahnung der beiden Bereiche, d. h. bei einer Pfeilverzahnung, die axialen Kräfte dem Ziel der Erfindung entsprechend zumindest weitgehenst gegeneinander aufzuheben, ist in jedem der beiden Bereiche der Planetenräder eine unterschiedliche Schrägung der Verzahnung zu wählen. Dabei ist der Schrägungswinkel in demjenigen Bereich, in dem die Umfangskraft die größere ist, die Schrägung kleiner zu halten als in dem anderen Bereich mit der relativ geringeren Umfangskraft.

Die Planetenräder sind zweckmäßigerweise axial frei beweglich gelagert. Durch die gegensinnige Schrägverzahnung erhalten die Planetenräder eine durch die beiden Hohlradzahnräder vorgegebene definierte Lage, in die sie durch das Zusammenspiel mit den Hohlradzahnrädern zwangsgeführt werden. Diese bei einem Getriebe mit mehreren umlaufenden Planetenrädern einen einwandfreien Getriebelauf gewährleistende Zwangsführung der Planetenräder innerhalb der beiden Hohlräder läßt sich wie folgt erklären.

Die über den Umfang verteilten Planetenräder eines Wolfrom-Getriebes kämmen gleichzeitig in einem festen und einem rotierenden Hohlrad. Durch die axial frei bewegliche Lagerung der Planetenräder kann sich jedes dieser Planetenräder die axiale Laufmitte zwischen den beiden Hohlrädern suchen, wodurch Fertigungsungenauigkeiten in dem aus den beiden Hohlrädern und den Planetenrädern bestehenden Zuordnungssystem ausgeglichen werden können.

Die Herstellung gegensinnig schrägverzahnter Planetenräder ist in der Praxis recht aufwendig. Dies gilt insbesondere, wenn eine hohe Fertigungsgenauigkeit, wie sie zur Verwirklichung der vorliegenden Erfindung notwendig ist, gefordert ist. Eine recht vorteilhafte Maßnahme zur Erleichterung der Fertigung solcher Planetenräder besteht darin, die beiden Bereiche der Planetenräder an axial in diese beiden Bereiche aufgeteilten getrennten Planetenteilrädern zu erzeugen und die beiden Planetenteilräder danach zu einem funktionell einteiligen Planetenrad zusammenzufügen. Bei dem Fügen ist allerdings darauf zu achten, daß bei jedem der auf dem Umfang des Umlaufträgers des Getriebes zu verteilenden Planetenrad die Bereichsverzahnungen umfangsmäßig exakt gleich zueinander ausgerichtet sind. Die Verbindung der getrennt hergestellten Planetenteilräder zu einem funktionell einzigen Planetenrad erfolgt in recht vorteilhafter Weise durch über den Umfang der Planetenräder verteilte Schrauben, die in durch beide Teile jeweils axial fluchtend durchgehende Gewindebohrungen eingebracht sind.

Planetenräder mit gegensinnig schrägverzahnten Bereichen aus getrennt hergestellten Planetenteilrädern sind damit wesentlich einfacher und kostengünstiger zu fertigen als solche aus einem einzigen Stück. Bei getrennter Herstellung kann u. a. auch gezielt auf bestimmte Eigenschaften, die in den unterschiedlichen Planetenradbereichen gewünscht sein können, hingearbeitet werden.

Die beiden getrennten Verzahnungsbereiche der Planetenräder können jeweils mit verschiedenen Modulen für sich optimiert werden.

Die unterschiedlichen Teilkreisdurchmesser der beiden Planetenradbereiche ermöglichen Wirkungsgradunterschiede je nach Drehrichtung des Getriebes.

Durch den Umstand, daß das Sonnenrad des Getriebes nur in einen axialen Teilbereich der Planetenräder eingreift, ist eine exakte Herstellung mit kleinen Zähnezahlen möglich. Mit Bezug auf das erfindungsgemäße Getriebesystem bedeutet dies für alle Ubersetzungen kleine Wälzgeschwindigkeiten.

Des weiteren ermöglichen Planetenräder mit unterschiedlichen Zähne zahlen und nach Bedarf optimierten Verzahnungsgeometrieen, d. h. beispielsweise ungleich schräg gegensinnig ausgerichteten Zähnen, verschiedene Wirkungsgrade. Im übrigen ist durch die unterschiedlichen Teilkreisdurchmesser in den beiden Planetenradbereichen beispielsweise vom Antrieb in Richtung Abtrieb ein hoher und in umgekehrter Richtung, d. h. vom Abtrieb zum Antrieb niedriger Wirkungsgrad erreichbar. Erwünscht kann ein solcher Wirkungsgradunterschied bei Hebezeuggetrieben sein, bei denen bei abtriebsseitiger Drehung durch einen niedrigen Wirkungsgrad eine Bremswirkung erzielt werden soll. Außer durch unterschiedliche Teilkreisdurchmesser lassen sich unterschiedliche Wirkungsgrade in geringem Maße auch noch durch verschiedene Zahnschrägen in den beiden Bereichen erreichen. Dabei ist die Zuordnung zwischen Schrägstellung der Zähne und Wirkungsgrad derart, daß der Wirkungsgrad mit ansteigender Zahnschräge abnimmt.

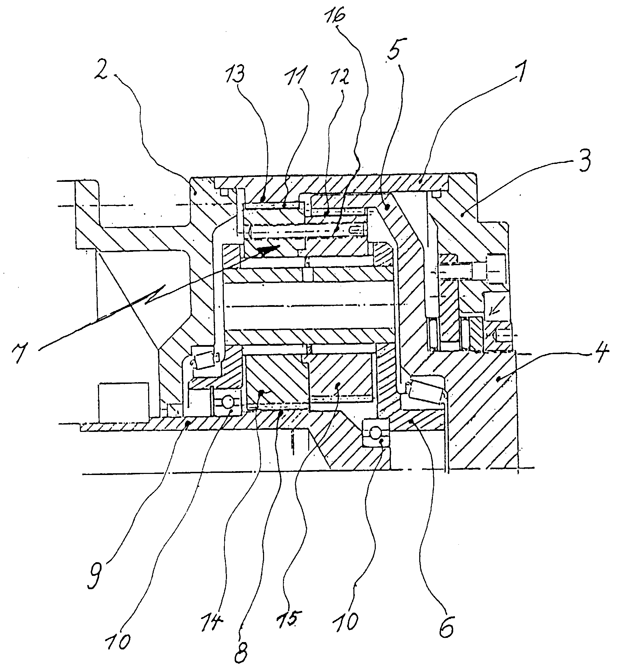

Besonders vorteilhafte konstruktive Ausgestaltungen eines erfindungsgemäßen Getriebes sind Gegenstand der Unteransprüche 7 bis 9. Auf diese wird bei der Beschreibung eines in der Zeichnung dargestellten Ausführungsbeispieles noch näher eingegangen werden.

Durch den Einsatz einer erfindungsgemäßen Pfeilverzahnung durch gegensinnige Zahnschrägung in den beiden Bereichen der Planetenräder sind ohne das Auftreten axial unausgeglichener Axialkräfte große Schrägungswinkel zur Erzielung eines geräuscharmen Getriebebetriebes einsetzbar. Durch eine große Schrägverzahnung lassen sich die Zahnräder schmal ausbilden, wodurch ein axial insgesamt kleinbauendes Getriebe erzielbar ist.

Die ein Ausführungsbeispiel darstellende Zeichnung zeigt einen Längsschnitt durch ein zweistufiges Wolfrom-Getriebe.

Mit dem dargestellten Wolfrom-Getriebe soll eine Übersetzung ins Langsame mit hohem Wirkungsgrad, geringer Geräuschentwicklung, hoher Genauigkeit und bei möglichst kompakter Bauweise erzielt werden.

Das Getriebegehäuse besteht aus im wesentlichen drei Bauteilen. nämlich einem Mittelteil 1 und zwei stirnseitigen Abdeckungen, von denen die eine 2 antriebsseitig und die andere 3 abtriebsseitig das Mittelteil 1 abdeckt.

In der abtriebsseitigen Abdeckung 3 des Getriebegehäuses ist ein eine Abtriebswelle 4 bildendes Hohlrad 5 drehbar gelagert und zwar unter axialer und radialer Fixierung. Angetrieben wird dieses Hohlrad 5 von in einem Planetenradträger 6 radial geführten Planetenrädern 7. Diese Planetenräder 7 werden wiederum angetrieben von dem Sonnenrad 8 einer Antriebswelle 9. Radial und axial gelagert ist der Planetenradträger 6 beidseitig der Planetenräder 7 in der antriebsseitigen Gehäuse-Abdeckung 2 einerseits und in dem drehbaren Hohlrad 5 andererseits. Des weiteren stützen sich die Antriebswelle 9 und der Planetenradträger 6 beidseitig der Planetenräder 7 gegenseitig über Radiallager 10 ab.

Die Planetenräder 7, von denen über den Getriebeumfang mehrere verteilt in dem Planetenradträger 6 angeordnet sind, sind axial in einen ersten und zweiten Bereich 11,12 aufgeteilt. Diese beiden Bereiche sind gegensinnig schrägverzahnt und zwar mit gegensinnig ungleicher Schrägung der Zähne.

In dem ersten Bereich 11 kämmen die Planetenräder 7 zum einen in dem Sonnenrad 8 der Antriebswelle 9 und zum anderen in einem fest mit dem Gehäuse-Mittelteil 1 verbundenen stehenden Hohlrad 13. Der zweite Bereich 12 der Planetenräder 7 treibt das drehbare zum Getriebeäußeren führende Hohlrad 5 an.

Der erste Bereich 11 der Planetenräder 7 besitzt einen gegenüber dem zweiten Bereich 12 größeren Teilkreisdurchmesser mit einer dem zweiten Bereich gegenüber entsprechend höheren Zähnezahl. Je nach der gewählten Zähnezahldifferenz wird ein hohes oder niedrigeres Übersetzungsverhältnis eingestellt, wobei das Übersetzungsverhältnis wolfromgetriebespezifisch mit zunehmender Zähnezahldifferenz abnimmt und bei einer Differenz von nur einem Zahn seinen größtmöglichen Wert besitzt.

Die beiden Hohlräder 5 und 13 besitzen axial einen geringen Abstand zueinander. Dies ist erforderlich, damit die in sich jeweils gegensinnig verzahnten axial frei beweglich gelagerten Planetenräder 7 ihre axiale Lauflage zwischen den Hohlrädern 5 und 13 selbständig einnehmen können. Dadurch können Verzahnungstoleranzen verschiedensten Ursprunges zwischen den einzelnen Planetenrädern 7 und den Gegenrädern 5,13 und 8 auf recht einfache und wirkungsvolle Weise ausgeglichen werden. Die gegensinnige Schrägverzahnung kann auch als Pfeilverzahnung bezeichnet werden.

Die beiden Bereiche 11 und 12 der Planetenräder 7 werden von getrennt hergestellten funktionsmäßig fest miteinander verbindbaren Planetenteilrädern 14 und 15 gebildet. Paßgenau verbinden lassen sich die jeweils beiden Planetenteilräder 14,15 über Schrauben 16, die in fluchtende Gewindebohrungender Planetenteilräder 14,15 einbringbar sind. Uber den Umfang der Planetenräder 7 sind jeweils mehrere Schrauben 16 vorgesehen. Diese Schrauben 16 besitzen an einem Ende einen Innensechskant und sind daher vollständig in den entsprechenden Gewindebohrungen in der Form von Gewindestiften versenkbar. Um in Umfangsrichtung paßgenau gegeneinander ausgerichtet zu sein, ist bei den miteinander verbundenen Planetenteilrädern 14,15 die Verdrehgenauigkeit durch zusätzliche nicht dargestellte axiale Paßstifte gesichert.

Bei einer Rückwärtsdrehung des anhand der Zeichnung beschriebenen Wolfrom-Getriebes tritt zumindest aufgrund des zweiten Planetradbereiches 12 mit gegenüber dem ersten Planetenradbereich 11 geringerem Teilkreisdurchmesser eine Bremswirkung ein. Diese läßt sich bei der erfindungsgemäßen Getriebeausführung bewußt in weiten Grenzen bei in Gegenrichtung, d.h. Übersetzung ins Langsame, gleich gut bleibendem Wirkungsgrad variieren.

## Patentansprüche

1. Wolfrom-Planetenzahnradgetriebe mit axial in zwei unterschiedlich verzahnte Bereiche aufgeteilten Planetenrädern, von denen der eine erste Bereich gleichzeitig in einem rotierenden Sonnenrad und einem feststehenden Hohlrad und der zweite Bereich nur in einem drehbaren Hohlrad kämmt,
**dadurch gekennzeichnet,**
daß die beiden unterschiedlich verzahnten Bereiche (11, 12) der Planetenräder (7) gegensinnig schräg verzahnt sind, wobei jeder der beiden Bereiche für sich genommen eine einheitliche gleiche Zahnschräge besitzt.

2. Wolfrom-Getriebe nach Anspruch 1,
**dadurch gekennzeichnet,**
daß die beiden Planetenradbereiche (11, 12) unterschiedliche Teilkreisdurchmesser besitzen.

3. Wolfrom-Getriebe nach Anspruch 1 oder 2,
**dadurch gekennzeichnet,**
daß der Schrägungswinkel der beiden Planetenradbereiche (11, 12) gegensinnig ungleich ist.

4. Wolfrom-Getriebe nach einem der vorhergehenden Ansprüche,
**dadurch gekennzeichnet,**
daß die Planetenräder (7) axial frei beweglich gelagert sind.

5. Wolfrom-Getriebe nach einem der vorhergehenden Ansprüche,
**dadurch gekennzeichnet,**
daß die Planetenräder (7) jeweils aus zwei axial miteinander verbundenen getrennt hergestellten jeweils den ersten und zweiten Bereich (11, 12) bildenden Planetenteilrädern (14, 15) bestehen.

6. Wolfrom-Getriebe nach Anspruch 5,
**dadurch gekennzeichnet,**
daß die Planetenteilräder (14, 15) mit über den Umfang verteilten Schrauben (16), die in durch beide Teile jeweils axial fluchtend durchgehende Gewindebohrungen eingebracht sind, miteinander verbunden sind.

7. Wolfrom-Getriebe nach einem der vorhergehenden Ansprüche,
**gekennzeichnet durch die Merkmale:**
(a) das Getriebegehäuse ist im wesentlichen dreiteilig mit einem zwischen zwei stirnseitigen Abdeckungen (2, 3) eingespannten Mittelteil (1),
(b) der jeweils erste Bereich (11) der Planetenräder (7) kämmt in einem fest mit dem Gehäuse-Mittelteil (1) verbundenen Hohlrad (13) und besitzt einen gegenüber dem zweiten Bereich (12) größeren Teilkreisdurchmesser und eine höhere Zähnezahl,
(c) an dem ersten Bereich (11) der Planetenräder (7) greift an einer nach außen führenden ersten Welle (Antriebswelle 9) ein Sonnenrad (8) an,
(d) ein in dem Getriebegehäuse drehbar gelagertes mit einer zweiten nach außen führenden Welle (Abtriebswelle 4) verbundenes Hohlrad (5) kämmt in dem jeweils zweiten Bereich (12) der Planetenräder (7).

8. Wolfrom-Getriebe nach Anspruch 7,
**dadurch gekennzeichnet,**
daß das drehbare mit der zweiten nach außen führenden Welle (Abtriebswelle 4) verbundene Hohlrad (5) in der dem zweiten Planetenrad-Bereich (12) zugewandten stirnseitigen Gehäuse-abdeckung (3) axial und radial gelagert ist.

9. Wolfrom-Getriebe nach Anspruch 7 oder 8,
**dadurch gekennzeichnet,**
daß die Planetenräder (7) in einem Planetenradträger (6) gelagert sind, der einerseits radial innen beidseitig der Planetenräder (7) auf der ersten Welle (Antriebswelle 9) lagert und sich andererseits radial außen an seinem einen axialen Ende in der dem ersten Planetenrad-Bereich (11) zugewandten stirnseitigen Gehäuseabdeckung (2) und an seinem anderen Ende innerhalb des drehbaren Hohlrades (5) abstützt.

## Claims

1. Wolfrom planetary gear system with planet wheels which are axially split into two differently toothed regions, of which the first region meshes simultaneously in a rotating sun wheel and fixed ring gear and the second region meshes only in a rotatable ring gear, characterized in that the two differently toothed regions (11, 12) of the planet wheels (7) are helically geared in opposite directions, each of the two regions taken independently having a uniform identical tooth skew.

2. Wolfrom gear system according to claim 1, characterized in that the two planet wheel regions (11, 12) have different pitch circle diameters.

3. Wolfrom gear system according to claim 1 or 2, characterized in that the skew angle of the two planet wheel regions (11, 12) is unequal in opposite directions.

4. Wolfrom gear system according to one of the preceding claims, characterized in that the planet wheels 7 are axially freely movably mounted.

5. Wolfrom gear system according to one of the preceding claims, characterized in that the planet wheels 7 each consist of two axially interconnected, separately produced partial planet wheels (14, 15) forming the first and second region (11, 12) respectively.

6. Wolfrom gear system according to claim 5, characterized in that the partial planet wheels (14, 15) are connected to one another by screws (16) which are distributed round the periphery and are introduced into continuous threaded bores axially aligned through both parts in each case.

7. Wolfrom gear system according to one of the preceding claims, characterized by the features:
a) the gear housing is essentially in three parts with a central part (1) fixed between two terminal covers (2, 3),
b) the first respective region (11) of the planet wheels (7) meshes in a ring gear (13) rigidly connected to the housing central part (1) and has a greater pitch circle diameter and larger number of teeth in comparison with the second region (12),
c) a sun wheel (8) acts on an outwardly leading first shaft (driving shaft 9) on the first region (11) of the planet wheels (7),
d) a ring gear (5) rotatably mounted in the gear housing and connected to a second outwardly leading shaft (output shaft 4) meshes in the second respective region (12) of the planet wheels (7).

8. Wolfrom gear system according to claim 7, characterized in that the rotatable ring gear (5) connected to the second outwardly leading shaft (output shaft 4) is axially and radially mounted in the terminal housing cover (3) facing the second planet wheel region (12).

9. Wolfrom gear system according to claim 7 or 8, characterized in that the planet wheels (7) are mounted in a planet carrier (6) which on the one hand rests radially internally on either side of the planet wheels (7) on the first shaft (driving shaft 9) and on the other hand is supported radially externally at one axial end in the terminal housing cover (2) facing the first planet wheel region (11) and at its other end within the rotatable ring gear (5).

## Revendications

1. Train d'engrenages planétaire Wolfrom ayant des satellites divisés axialement en deux zones à dentures différentes dont une première engrène simultanément avec un planétaire tournant et une couronne fixe et la deuxième engrène seulement avec une couronne tournante, caractérisé par le fait que les deux zones à dentures différentes (11, 12) des satellites ont des dentures hélicoïdales de sens contraire, chacune des deux zones ayant son propre angle d'inclinaison de denture.

2. Train Wolfrom selon la revendication 1, caractérisé par le fait que les deux zones (11, 12) des satellites ont des diamètres primitifs différents.

3. Train Wolfrom selon l'une des revendications 1 et 2, caractérisé par le fait que les angles d'inclinaison des dentures des deux zones (11, 12) des satellites sont différents et de sens contraire.

4. Train Wolfrom selon l'une des revendications précédentes, caractérisé par le fait que les satellites (7) sont montés avec liberté de mouvement axial.

5. Train Wolfrom selon l'une des revendications précédentes, caractérisé par le fait que les satellites (7) sont constitués chacun de deux satellites partiels (14, 15) fabriqués séparément, assemblés axialement et formant respectivement la première et la deuxième zones (11, 12).

6. Train Wolfrom selon la revendication 5, caractérisé par le fait que les satellites partiels (14, 15) sont assemblés par des vis (16) réparties sur la circonférence vissées dans des trous taraudés alignés axialement traversant les deux parties.

7. Train Wolfrom selon l'une des revendications précédentes, caractérisé par les caractéristiques suivantes :
(a) le carter du train est essentiellement en trois parties, une partie centrale (1) serrée entre deux couvercles frontaux (2, 3),
(b) la première zone (11) des satellites (7) engrène avec une couronne (13) fixée rigidement à la partie centrale (1) du carter et a un plus grand diamètre primitif et un plus grand nombre de dents que la deuxième zone (12),
(c) la première zone (11) des satellites (7) est attaquée à un premier arbre menant à l'extérieur (arbre d'entrée 9) par un planétaire (8),
(d) une couronne (5) montée tournante dans le carter du train et jointe à un deuxième arbre menant à l'extérieur (arbre de sortie 4) engrène avec la deuxième zone (12) des satellites (7).

8. Train Wolfrom selon la revendication 7, caractérisé par le fait que la couronne tournante (5) jointe au deuxième arbre menant à l'extérieur (arbre de sortie 4) est montée supportée axialement et radialement dans le couvercle frontal (3) du carter situé du côté de la deuxième zone (12) des satellites.

9. Train Wolfrom selon l'une des revendications 7 et 8, caractérisé par le fait que les satellites (7) sont montés dans un châssis (6) qui d'une part est monté intérieurement radialement sur le premier arbre (arbre d'entrée 9) des deux côtés des satellites (7) et d'autre part s'appuie extérieurement radialement, à une extrémité axiale, dans le couvercle frontal (2) du carter situé du côté de la première zone (11) des satellites, et à l'autre extrémité, à l'intérieur de la couronne tournante (5).
